Europäisches Patentamt

European Patent Office

Office européen des brevets

(19)

(11) Numéro de publication: **0 014 109**
**B1**

(12) **FASCICULE DE BREVET EUROPEEN**

(45) Date de publication du fascicule du brevet: **24.10.84**

(21) Numéro de dépôt: **80400013.1**

(22) Date de dépôt: **04.01.80**

(51) Int. Cl.³: **B 01 F 13/08, F 28 F 13/16**

(54) **Procédé et dispositif de mise en oeuvre de réactions dans un milieu fluide.**

| | |
|---|---|
| (30) Priorité: **17.01.79 FR 7901061** | (73) Titulaire: **EXTRAMET**<br>**7 rue Jean Jaurès Ville La Grand**<br>**F-74100 Annemasse (FR)** |
| (43) Date de publication de la demande:<br>**06.08.80 Bulletin 80/16** | (72) Inventeur: **Bienvenu, Gérard**<br>**Les Collines A 4 Route de Livron**<br>**Vetraz-Monthoux 74100 Annemasse (FR)** |
| (45) Mention de la délivrance du brevet:<br>**24.10.84 Bulletin 84/43** | |
| (84) Etats contractants désignés:<br>**AT BE CH DE GB IT LU NL SE** | (74) Mandataire: **Thibon-Littaye, Annick**<br>**Cabinet A. THIBON-LITTAYE 11 rue de l'Etang**<br>**F-78160 Marly-le-Roi (FR)** |
| (56) Documents cités:<br>**DE-A-2 341 818**<br>**FR-A-2 378 084**<br>**GB-A-1 330 975**<br>**GB-A-1 523 637**<br>**US-A-3 291 318**<br>**US-A-4 093 189** | |

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

L'invention concerne l'exploitation des effets des champs magnétiques sur la matière à des fins industrielles, pour la mise en oeuvre des réactions en milieu dispersé.

L'invention a principalement pour objet un procédé qui permet de favoriser des réactions, dans un milieu fluide, et qui consiste essentiellement en ce que l'on soumet à un champ magnétique variable une matière magnétique sous forme librement dispersée dans ce fluide, réalisée, au moins en surface, en une substance jouant un rôle chimique ou physicochimique dans ladite réaction.

La matière magnétique peut se présenter sous forme de particules ou éléments de toutes formes et de toutes dimensions, suivant notamment l'application envisagée et les dimensions du récipient ou du réacteur contenant le milieu fluide. Ces particules ou éléments ne sont pas nécessairement constitués d'une substance solide homogène; ils peuvent également comporter des parties de différentes natures, les unes contre les autres ou les unes dans les autres. Ceci permet en pratique de rendre magnétique pour le procédé de l'invention n'importe quelle substance, par exemple en utilisant des mélanges ou, de préférence, en réalisant des particules ou éléments renfermant un noyau d'une matière magnétique courante, enrobé d'une couche superficielle en une substance choisie par ailleurs en fonction des constituants présents dans le milieu et du rôle qui lui est dévolu dans la réaction. Les matières qualifiées de magnétiques dans le cadre de l'invention sont principalement les matières ferromagnétiques, comme le fer doux et les minerais de fer, mais aussi éventuellement les matières fortement paramagnétiques, l'essentiel étant que la matière dispersée se déplace sélectivement au sein du milieu fluide sous l'effet du champ magnétique.

Le champ magnétique peut être créé par tous moyens classiques, dans une ou plusieurs directions, du moment qu'il est possible de le faire varier, en intensité et/ou en sens ou direction. On utilise de préférence des champs magnétiques suffisamment intenses, avec des variations suffisamment rapides, pour maintenir efficacement la matière ferromagnétique en suspension dans le fluide et la soumettre à des accélérations sensiblement supérieures à celles qu'elle peut subir par ailleurs, par exemple du fait de la pesanteur.

On peut en particulier créer un champ magnétique, transversalement par rapport à la pesanteur, au moyen de différentes bobines électromagnétiques disposées à l'extérieur d'un récipient ou réacteur contenant le milieu fluide et la matière magnétique. Ces bobines peuvent être eu nombre d'au moins deux, mais de préférence plus nombreuses, réparties autour du récipient ou réacteur sur un même niveau. Le dispositif comporte alors avantageusement des moyens de commande de l'alimentation des bobines, en eux-mêmes classiques, permettant d'alimenter en courant continu ou alternatif différentes bobines successivement ou en alternance. On peut également disposer des bobines analogues sur au moins deux niveaux différents du dispositif. De préférence, les bobines sont alors disposées en plaçant des pôles opposés l'un au-dessus de l'autre, de même que les pôles adjacents autour du récipient ou réacteur sont avantageusement des pôles opposés. Les différentes bobines peuvent être alimentées successivement de manière aléatoire ou selon toute forme de périodicité.

Dans d'autres cas, il peut être avantageux de disposer des électro-aimants successivement sur le trajet que suivrait la matière magnétique en l'absence de champ magnétique et d'alimenter les électro-aimants cycliquement l'un après l'autre de manière à entraîner la matière magnétique en sens inverse du trajet ci-dessus. Cette disposition peut être avantageuse, en particulier, lorsque la matière magnétique est constituée de particules en suspension dans un fluide en circulation continue dans un sens déterminé, et surtout lorsqu'il s'agit de particules fines entraînées avec ce fluide sous forme de boue. Dans d'autres cas, on préfère au contraire commander l'alimentation des électro-aimants de manière alternative telle que l'on provoque des mouvements aller et retour des particules par rapport au trajet du fluide. Par ailleurs, il est souvent avantageux d'interrompre périodiquement le champ magnétique créé dans chaque direction considérée, la matière magnétique étant alors entraînée, pendant l'interruption du champ, par les autres forces auxquelles elle peut être soumise, par exemple par entraînement par le courant de fluide, par la force ascensionnelle des lits fluidisés, ou par l'action de la pesanteur. Mais dans ce cas comme dans les précédents, on a tout intérêt à conserver au moins une alternance périodique entre des champs en sens opposés dans des directions au moins voisines, si ce n'est confondues, de préférence transversales par rapport à la direction selon laquelle s'exerce la résultante des autres forces éventuelles d'entraînement de la matière dispersée. On parvient ainsi aisément à réaliser des variations alternatives d'accélération qui contrarient toute possibilité d'organisation des particules en une circulation continue à vitesse linéaire constante.

On a déjà proposé d'utiliser un champ électrique variable, agissant sur une matière magnétique en dispersion dans un milieu fluide, pour assurer l'agitation et le mélange de ce milieu ou le transport de la matière. Mais on s'est alors toujours attaché à ce que cette matière soit parfaitement inerte vis-à-vis des constituants en présence, quitte par exemple à recouvrir des particules métalliques magnétiques d'un revêtement de matière plastique inerte. L'invention conserve les avantages d'une agitation efficace et homogène dans toute la masse, mais elle y ajoute une intervention des phénomènes magnétiques dans des réactions se produisant au contact de la matière dispersée.

Selon l'invention, la matière divisée magnétique mue par le champ magnétique variable est au moins partiellement et superficiellement constituée par une substance solide intervenant dans la réaction, par un effet chimique ou physico-chimique. On comprend dès lors que l'invention s'applique avec un intérêt industriel tout particulier à la mise en oeuvre de réactions faisant intervenir un fluide, notamment un liquide, et une substance solide divisée magnétique. Il doit être entendu ici qu'une substance active solide impliquée dans une réaction peut être naturellement magnétique d'elle même, ou qu'elle peut être rendue magnétique par incorporation d'un élément ou composé magnétique.

D'une manière générale, les champs magnétiques variables appliqués selon l'invention facilitent la mise en oeuvre de toutes sortes de réactions qui s'effectuent en milieu dispersé. Ces réactions peuvent être chimiques comme les réactions d'oxydo-réduction ou les échanges électro-chimiques, ou physicochimiques comme les adsorptions, les effets catalytiques, d'autres mises en solution ou précipitations. Une même réaction peut aussi procéder à la fois de différents types d'actions physicochimiques, qui peuvent se trouver favorisés simultanément, en combinaison les uns avec les autres, par l'effet des champs magnétiques variables sur la milieu dispersé. Les exemples de réactions cités ici ne sont aucunement limitatifs, pas plus que les applications particulières qui seront envisagées par la suite et dont la diversité fera au contraire entrevoir la multitude et la variété des applications du procédé selon l'invention.

Dans les diverses réactions mises en oeuvre, les phases solide et fluide peuvent être simples ou complexes. Une phase solide dispersée peut être constituée d'une ou de plusieurs matières différentes, dont l'une est avantageusement magnétique dans les modes de mise en oeuvre préférés de l'invention. Une phase fluide peut être formée d'un gaz ou mélange gazeux, ou d'un liquide, ou encore d'un mélange de gaz et de liquide. De préférence, il s'agit principalement d'un liquide, qui peut être constitué notamment d'un ou plusieurs composés en solution dans un solvant tel que l'eau. Le milieu réactionnel peut encore être formé de liquides non miscibles dispersés l'un dans l'autre. Les phases solide et fluide peuvent être choisies de manière à être sensiblement immobiles l'une par rapport à l'autre en l'absence des variations de champ magnétique créées dans le procédé de l'invention, mais le plus souvent une phase solide est maintenue en suspension dans le fluide, déjà en l'absence même de champ magnétique, notamment par dispersion ou fluidisation de particules solides dans le milieu fluide en imprimant à l'ensemble fluide-particules un mouvement déterminé par tout mode particulier d'écoulement hydrodynamique.

Il en résulte que l'invention s'applique en particulier à la mise en oeuvre de toutes les réactions qui s'effectuent déjà de manière classique en milieu dispersé, mais qui gagneront à voir le milieu réactionnel soumis aux champs variables de l'invention, surtout lorsqu'il contient des particules solides magnétiques intervenant au moins en surface dans une réaction chimique, soit comme produit réagissant au départ de la réaction, soit comme produit résultant, soit encore comme produit favorisant la réaction sans figurer directement dans l'équation d'équilibre chimique, par exemple par effet catalytique. Dans ce cadre, l'invention s'applique d'une manière particulièrement avantageuse aux divers traitements des minerais magnétiques en milieu aqueux et aux diverses réactions d'échange électrochimique avec dissolution ou dépôt d'un métal soit lui-même magnétique, soit enrobant des particules magnétiques, en particulier aux traitements de lixiviation et de cémentation, ainsi qu'aux réactions de catalyse hétérogène.

Les avantages du procédé de l'invention appliqué à de telles réactions semblent dus, au moins pour une part, à un effet d'agitation intense des particules dans le milieu réactionnel et à sa répartition homogène dans toute la masse. Mais on a observé en outre qu'à cet effet que l'on peut qualifier de mécanique, ou macroscopique, s'ajoute un effet local physico-chimique, en quelque sorte un effet microscopique, qui se produit à l'interface solide-liquide, sous l'influence des champs magnétiques, entre deux espèces ioniques de susceptibilités magnétiques différentes, et cela d'autant plus qu'elles sont animées de vitesses relatives importantes. Un tel effet microscopique pourrait être à l'origine de l'efficacité supérieure du procédé de l'invention, inexplicable par le seul effet macroscopique d'agitation, que l'on constate dès que l'on met en oeuvre une réaction faisant intervenir deux substances de propriétés magnétiques différentes. On peut en effet comprendre que l'effet qualifié de microscopique soit tout spécialement sensible dans ce cas. La combinaison d'effets macroscopiques et d'effets microscopiques dont il vient d'être question se manifeste en particulier par une amélioration de rendement, des conditions opératoires moins sévères, ou une plus grande pureté des produits obtenus. Mais naturellement, cet essai d'explication des phénomènes ne peut d'aucune manière être interprété comme limitatif de l'invention.

Ainsi qu'on l'a déjà laissé entendre, l'invention s'étend à toute réaction effectuée en système dispersé, quel que soit le mode de dispersion, y compris notamment à la mise en oeuvre, sous champ magnétique variable, de réaction solide-fluide effectuées sur des solides dispersés magnétiques en lit fixe. Cependent, il est apparu généralement préférable de conduire les réactions de manière que les variations de champ magnétique participent activement, si ce n'est même de façon prépondérante, à l'établissement d'une suspension d'une phase solide active dans la réaction, en utilisant en outre des particules solides relativement fines, soumises à des champs magnétiques suffisants pour imposer des vitesses différentielles importantes entre les particules et le milieu fluide. Ces vitesses peuvent être d'un ordre de grandeur très différent des lits fluidisés classiques, de sorte que l'invention permet de combiner ensemble divers avantages liés à la grande surface d'échange, à l'efficacité d'agitation, aux vitesses différentielles importantes et aux différences de propriétés magnétiques. A titre d'exemple, grâce à des accélérations momentanées très élevées, on peut, sur des particules ferromagnétiques telles que celles des procédés de traitement classiques des minerais magnétiques en suspension dans une solution aqueuse, réaliser des vitesses instantanées de plusieurs dizaines de mètres par seconde, avec des inductions magnétiques relativement modestes, de l'ordre de 0,1 weber par mètre carré, alors que dans des lits fluidisés classiques, on ne dépasse pas quelques centimètres par seconde.

Il convient encore de souligner qu'un effet bénéfique qui ne peut pas s'expliquer par la seule intervention de l'agitation du milieu est obtenu même lorsque la matière divisée magnétique n'est pas directement impliquée chimiquement dans la réaction mise en oeuvre. En d'autres termes, les produits intervenant dans la réaction peuvent être tous différents de la matière magnétique qui assure l'agitation sous l'effet du champ magnétique variable. Tel est le cas notamment lorsque la surface des particules a simplement un rôle activateur pour la réaction recherchée. Elle peut agir par exemple comme agent oxydant ou agent réducteur pour des composés en solution, comme catalyseur, comme conducteur électrique dans des réactions électrochimiques. Tel est le cas aussi lorsqu'il s'agit d'une réaction entre deux liquides non miscibles présentant des susceptibilités magnétiques différentes, ou d'une réaction chimique faisant intervenir deux composés en solution présentant des propriétés magnétiques différentes. Ce dernier cas trouve une application par exemple dans la purification de solutions zincifères par réduction par du zinc du cuivre en solution, qui fera l'objet d'un exemple de mise en oeuvre détaillé plus loin, illustrant une réaction d'échange entre deux métaux qui présentent des susceptibilités magnétiques différentes quand ils sont en solution dans un milieu liquide solubilisant. Pour la mise en oeuvre de telles réactions par le procédé de l'invention, on assure une agitation du milieu fluide par des moyens magnétiques comme déjà définis, en utilisant par exemple des éléments de fer doux. Ceux-ci peuvent être enrobés d'une substance inerte vis-à-vis du milieu réactionnel du strict point de vue chimique, tout en conservant un rôle physicochimique. On peut aussi utiliser le zinc réducteur sous la forme de revêtement solide déposé sur les éléments ou particules de la matière magnétique d'agitation, éventuellement avec interposition d'une couche inerte entre ce revêtement et la substance magnétique elle-même.

Dans le cadre des réactions chimiques ou physico-chimiques faisant intervenir au moins deux produits de propriétés magnétiques différentes dont l'un est une substance magnétique sous forme divisée, se placent notamment toutes les réactions de catalyse hétérogène utilisant un catalyseur magnétique, ou rendu tel par incorporation d'une substance magnétique, et en particulier les réactions d'hydrogénation catalysées par du nickel divisé. L'agitation magnétique du catalyseur permet alors d'augmenter l'efficacité de la réaction plus que ne peut le laisser envisager la seule influence sur la dispersion du catalyseur. On donnera ci-après un exemple d'une telle réaction concernant l'hydrogénation d'acides gras à doubles liaisons éthyléniques.

Dans le même cadre, l'invention s'applique avantageusement aux réactions chimiques d'oxydo-réduction et aux réactions d'attaque acide effectuées sur des minerais magnétiques. Des exemples seront donnés sur la lixiviation des mattes de nickel ou de cuivre d'une part, sur l'attaque acide de l'imménite d'autre part. Des réactions d'oxydo-réduction analogues sont représentées par les réactions de cémentation dans lesquelles le fer est utilisé pour déplacer du cuivre, de l'argent ou d'autres métaux nobles de leurs solutions. Dans le cas du fer, le cémentant est ferromagnétique, mais si le cémentant n'est pas magnétique, on peut aussi bien le rendre magnétique en y incorporant un noyau de fer par exemple. Aux réactions de cémentation s'apparentent notamment les dépôts de métaux magnétiques en revêtement partiel sur une substance active solide, ou le revêtement de particules magnétiques maintenues en suspension par le champ variable, par une substance active initialement en solution dans le milieu fluide. Dans le premier cas, le magnétisme de la matière dispersée peut être dû seulement au revêtement progressivement formé à partir d'un composé initialement en solution et déposé sur un support solide initialement non magnétique, et maintenu alors en suspension par un écoulement hydrodynamique tel que celui qui est créé dans les lits fluidisés classiques.

Ces exemples d'application mettent en outre en évidence des effets combinés, sur plusieurs transformations physiques ou chimiques, de l'entraînement magnétique de la substance divisée conformément à l'invention. Ainsi, par exemple, l'application d'un champ magnétique variable à un milieu réactionnel comprenant un solide ferromagnétique en présence d'un liquide qui le dissout, par exemple par une réaction d'oxydo-réduction ou toute autre forme d'attaque chimique, a non seulement pour effet d'améliorer le rendement de la réaction chimique, d'augmenter sa vitesse, ou de permettre des conditions industrielles moins sévères, mais en outre la séparation des produits se trouve facilitée et un gain d'énergie est réalisé par le fait que la substance solide perd son magnétisme au fur et à mesure de la dissolution, les particules non magnétiques n'étant alors plus entraînées par le champ magnétique.

L'invention est illustrée ci-après par les exemples de mise en oeuvre particuliers qui suivent et, bien entendu, n'ont aucun caractère limitatif. Ainsi, l'invention n'est pas limitée aux conditions opératoires qui seront décrites dans le cadre de ces exemples. Elle n'est pas limitée non plus aux applications particulières envisagées, ni aux matériels suggérés pour la mise en oeuvre du procédé. Bien au contraire, l'homme de l'art pourra comprendre, dans la variété de ces quelques exemples particuliers, combien les perspectives d'application de l'invention sont diverses et touchent à des domaines industriels qui peuvent être très différentes les uns des autres. Une grande diversité apparaîtra également dans les dispositifs à champs magnétiques permettant la mise en oeuvre du procédé. Tous ces dispositifs ainsi qui toutes leurs variantes restent du domaine de l'invention.

De plus, on a décrit dans chacun des exemples ci-après un dispositif préféré pour la mise en oeuvre du procédé dans le cadre de l'application particulière considérée. Des critères de choix des dispositifs en fonction des conditions d'application apparaîtront également. Mais ici encore, les diverses associations de dispositifs avec les modes de mise en oeuvre particuliers du procédé n'ont aucun caractère limitatif, un même dispositif pouvant être utilisé pour des cas d'application variés et vice-versa.

Dans les exemples ci-après, les dispositifs particuliers décrits le sont en faisant référence aux figures 1 à 10 jointes dans lesquelles:

La figure 1 représente en coupe verticale partielle un dispositif selon l'invention, conçu pour être utilisé comme réacteur pour toute réaction. La conception et l'utilisation de ce réacteur font l'objet de l'exemple I.

Les figures 2A et 2B représentent schématiquement les positions respectives des pôles nord (N) et sud (S) à un instant déterminé dans le électro-aimants de l'agitateur de la figure 1, considéré en coupe transversale selon AA et BB, respectivement, de la figure 1.

La figure 3 représente schématiquement une installation utilisée dans le cadre de la purification de solutions zincifères dans l'exemple II, ainsi que le mode d'alimentation des électro-aimants associés au réacteur.

La figure 4 représente schématiquement une installation utilisée pour le traitement de solutions cuprifères dans l'exemple III.

La figure 5 représente schématiquement le détail du mode d'alimentation des bobines magnétiques associées au réacteur de la figure 4.

La figure 6 représente une installation à plusieurs réacteurs fonctionnant en parallèle, utilisée pour le traitement acide de l'ilménite en vue de son enrichissement dans l'exemple IV.

La figure 7 représente schématiquement une installation utilisée dans l'exemple V dans le cadre d'un traitement de lixiviation d'une matte de cuivre, cette installation comportant deux ensembles de réacteurs à agitation magnétique selon l'invention.

La figure 8 représente schématiquement un réacteur à agitation magnétique utilisé pour un traitement d'hydrogénation d'acides gras insaturés dans l'exemple VI.

Les figures 9 et 10 illustrent deux variantes du procédé de purification de solutions zincifères, décrites dans les exemples VII et VIII.

Exemple I—Agitateur magnétique tridimensionnel

Dans le présent exemple, on décrit un réacteur à agitation magnétique tridimensionnelle pouvant être utilisé pour la mise en oeuvre du procédé de l'invention.

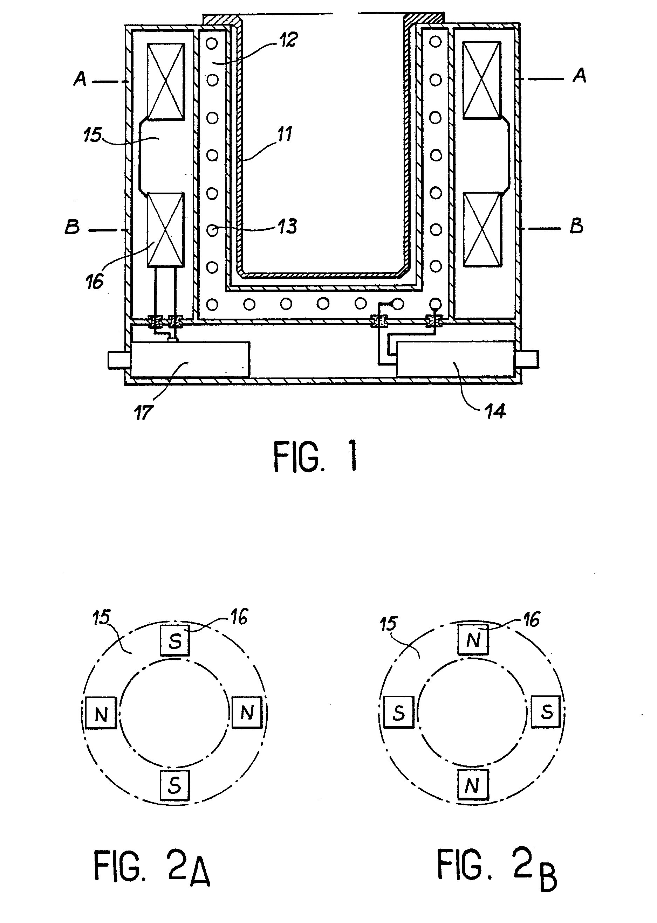

Le dispositif est représenté schématiquement sur la figure 1. Il comprend un corps creux 11 en aluminium, qui forme un logement dans lequel on place le récipient en verre ou en matière plastique dans lequel on veut effectuer la réaction. Près des parois du corps creux se trouve un corps de chauffe 12 comprenant une résistance chauffante 13 qui permet un chauffage homogène et régulé par l'intermédiaire d'un bloc de régulation 14. Derrière le corps de chauffe est ménagé un logement annulaire 15 qui reçoit quatre électro-aimants plats 16. Ce logement se trouve séparé du corps de chauffe par un isolant thermique.

La disposition des électro-aimants, à des intervalles angulaires de 90 degrés les uns des autres, est représentée sur les figure 2A et 2B. Les électro-aimants sont bobinés de façon qu'un pôle nord soit à côté d'un pôle sud. Un pôle déterminé se trouve ainsi face à un pôle de même signe au même niveau, et à la verticale d'un pôle de signe opposé. Les électro-aimants sont alimentés simultanément par paires (chaque paire comprenant deux aimants voisins) par l'intermédiaire d'un bloc d'alimentation 17, lequel comprend un montage électronique permettant d'alimenter alternativement chacune des paires d'aimants, et de faire varier la fréquence des alternances. Des champs magnétiques périodiques sont ainsi créés alternativement dans des directions différentes.

Le dispositif peut être utilisé pour réaliser toutes sortes de réactions en milieu dispersé de particules magnétiques.

Exemple II—Purification d'une solution zincifère

Le présent exemple se rapporte à une réaction d'échange par oxydo-réduction entre deux espèces métalliques. Dans le cas particulier considéré, ce type de réaction est exploité pour purifier une solution zincifère sulfurique par réduction par le zinc d'impuretés métalliques telles que le cuivre et le cobalt qu'elle contient.

Les deux espèces ioniques en solution, qui sont alors le zinc et par exemple le cuivre, présentent des susceptibilités magnétiques différentes bien qu'elles soient toutes deux paramagnétiques. La phase solide dispersée dans la solution à traiter est constituée par l'agent réducteur, c'est-à-dire par du zinc, en revêtement sur des particules ferromagnétiques soumises à l'agitation par champ magnétique.

Le traitement décrit dans cet exemple apporte donc un perfectionnement aux procédés classiques dans lesquels une solution zincifère destinée à l'électrolyse est soumise à un traitement d'épuration dans un lit fluidisé de particules de zinc.

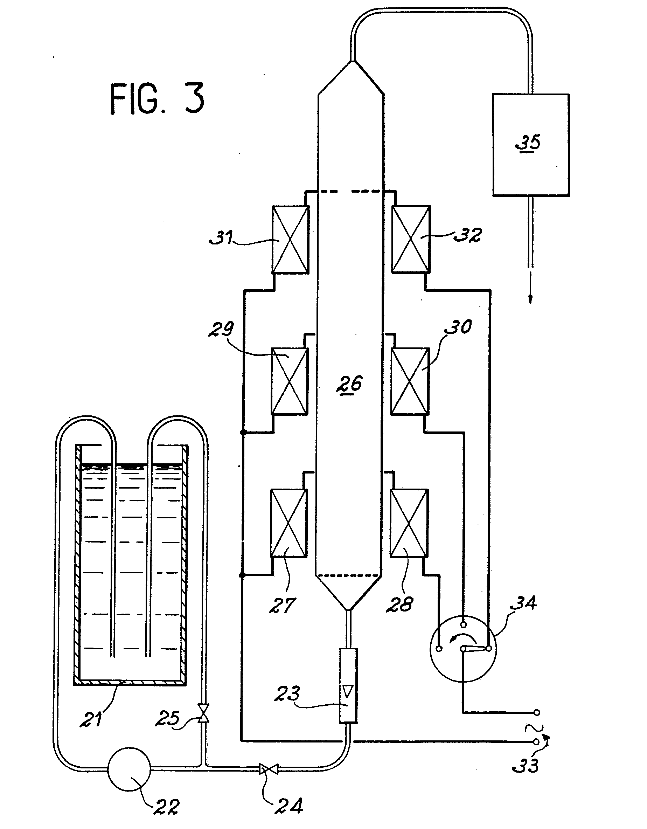

L'installation utilisée est schématiquement représentée sur la figure 3. Une cuve 21 contient la solution zincifère, constituée par une solution aqueuse sulfurique renfermant les éléments suivants:

| | |
|---|---|
| $Zn^{++}$ | 140 g/l |
| $Co^{++}$ | 9,7 mg/l |
| $Cd^{++}$ | 254 mg/l |
| $Sb^{++}$ | 7,2 mg/l |
| $Cu^{++}$ | 176 mg/l |

pH de l'ordre de 5

Densité de la solution de l'ordre de 1,35 g/cm$^3$
Température opératoire: 80°C.

Cette solution est véhiculée par une pompe 22 et envoyée, sous le contrôle d'un débitmètre 23 et de vannes 24 et 25, dans un réacteur à lit fluidisé 26 contenant des particules de fer zinguées. Ce réacteur est placé verticalement dans les entrefers de trois électroaimants disposés à trois niveaux au-dessus les uns des autres, dont les bobines respectives ont été représentées en 27—28, 29—30, 31—32. Ces électroaimants sont alimentés en courant inversé périodiquement de manière à provoquer un déplacement alternatif rapide des particules à travers le lit fluidisé.

En pratique, les trois électro-aimants sont alimentés, comme le montre la figure, à partir d'une source 33 de courant alternatif 220 V, par l'intermédiaire d'un contacteur tournant 34, constitué par un dispositif électro-mécanique rotatif actionné par un moteur à vitesse variable, qui permet d'alimenter cycliquement les paires de bobines 31—32, 29—30, 27—28, successivement.

Le rythme de commutation est de 3 contacts par seconde. La puissance installée dans chaque paire de bobines est de 600 watts.

Le lit fluidisé a une hauteur de 2,5 mètres, pour une section rectangulaire de 4 cm×20 cm. Les particules en suspension sont constituées de noyaux de fer sensiblement sphériques, de 0,8 mm environ de diamètre, recouverts d'une couche intermédiaire inerte de polyéthylène et d'une couche superficielle de zinc de 1,5 mm d'épaisseur. Le débit de la solution à travers le réacteur étant de 2,46 m$^3$ par heure, la porosité du lit est dans ces conditions de 0,64.

Des essais sont effectués avec et sans champ magnétique. Les particules de fer zinguées sont éliminées et remplacées progressivement avant que la couche de zinc réductrice soit complètement détruite, et séparées de la solution traitée, à la sortie du réacteur, dans un filtre-presse 35.

La composition de la solution traitée, dans l'un et l'autre cas, après différents temps de réaction, est indiquée ci-après par la concentration des impuretés métalliques, en milligrammes par litre:

| Agitation magnétique | | NON | | | OUI | | |
|---|---|---|---|---|---|---|---|
| Temps | (mn) | 10 | 20 | 30 | 10 | 20 | 30 |
| $Cu^{++}$ | mg/l | 3,2 | 3,2 | 3,2 | 1 | 0,8 | 0,6 |
| $Cd^{++}$ | „ | 3 | 3,2 | 2,7 | 0,18 | 0,06 | 0,07 |
| $Sb^{++}$ | „ | 0,1 | 0,48 | 1,27 | 0,4 | 0,1 | 0,004 |
| $Co^{++}$ | „ | 0,85 | 1,9 | 2,9 | 0,7 | 0,6 | 0,6 |

La composition du cément déposé sur les particules est, dans le cas de l'essai avec agitation magnétique, approximativement la suivante, en poids:

Zn 15%, Cu 34%, Cd 47%, Co 1,6%, Sb 1,2%, (divers 1,2%).

Exemple III—Cémentation du cuivre

Le présente exemple concerne comme le précédent la mise en oeuvre avec agitation magnétique d'une réaction d'échange entre un élément métallique en solution et un élément métal solide (pur ou allié) qui s'oxyde et passe en solution, mais dans ce cas le métal réducteur, ou cémentant, est directement constitué par du fer en phase dispersée. Par ailleurs, le procédé est appliqué à la récupération de l'élément cémenté, à partir de ses solutions diluées.

L'intérêt de cette application est lié au fait que l'on est de plus en plus amené à traiter des minerais de cuivre très dilués, voire même d'anciens terrils titrant entre 0,1 et 0,3% de cuivre. Les opérations de lixiviation pratiquées sur ces matières premières conduisent à des solutions acides très diluées en cuivre qui ne sont pas électrolysables industriellement et qui demandent une étape de concentration préalable à l'électrolyse, par exemple par extraction par solvant dans les procédés classiques. Le procédé de l'invention permet, par cémentation sur le fer élémentaire, de préparer à partir de ces solutions très diluées, éventuellement prétraitées par cémentation sur le cuivre pour en éliminer les métaux nobles, du cuivre ayant une grande pureté et pouvant être utilisé directement, après refusion, pour la fabrication d'alliages.

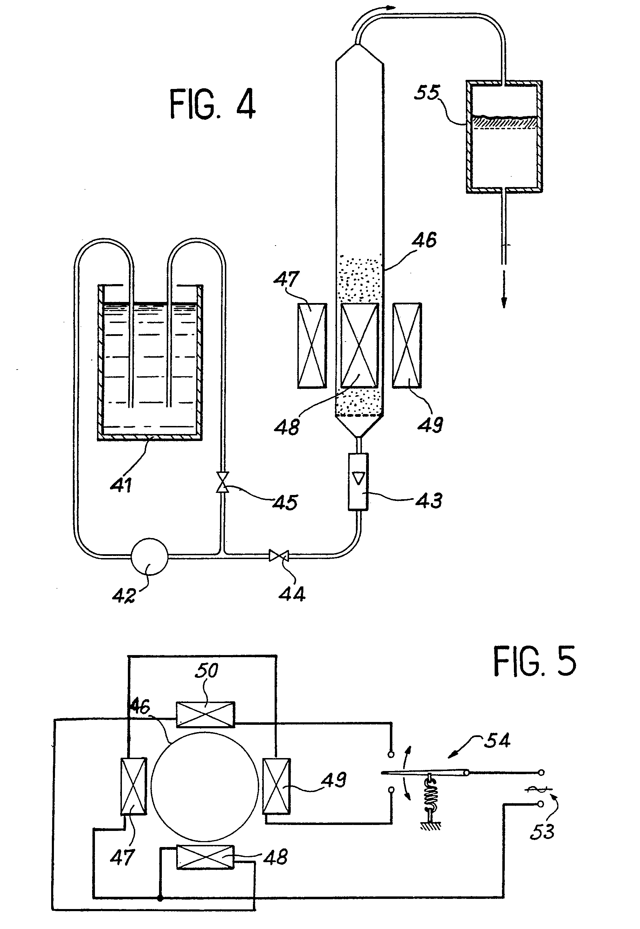

L'installation utilisée est schématiquement représentée sur les figures 4 et 5. Comme l'installation de la figure 3, elle comporte un réservoir 41 contenant la solution diluée, un réacteur à lit fluidisé 46, un filtre-presse 55, une pompe 42 pour véhiculer la solution à travers le réacteur et le filtre-presse, en passant par une vanne 44 et un débitmètre 43, et une vanne de dérivation 45. Mais l'installation diffère de la précédente par les moyens d'agitation magnétique.

Conformément aux figures, le lit fluidisé dans le réacteur 46 est placé au centre de quatre bobines électromagnétiques 47, 48, 49, 50, régulièrement réparties à un même niveau autour du réacteur, à 90 degrés les unes des autres. Les bobines sont couplées par paires de deux bobines diamétralement opposées et alimentées à partir d'une source de tension alternative 220 V par l'intermédiaire d'un commutateur. Celui-ci est constitué de toute manière classique, par exemple par une lame mobile sous la commande d'une came rotative (non représentée) entraînée par un moteur à vitesse variable, de manière à relier périodiquement alternativement l'une et l'autre des paires de bobines en formant à chaque instant des pôles nord et sud diamètralement opposés. On crée ainsi à travers le réacteur des champs magnétiques alternatifs discontinus alternativement dans deux directions perpendiculaires.

Dans un cas particulier, chaque paire de bobines correspond à une puissance d'environ 200 watts et le champ magnétique discontinu est appliqué à une fréquence de 10 impulsions par minute à un lit fluidisé de 100 cm$^2$ de section et de 10 cm de hauteur (entièrement couvert par la zone d'application du champ magnétique) contenant des particules de fer sphéroïdales de diamètre moyen égal à 0,06 cm. L'induction magnétique réalisée au coeur du lit a une valeur de 0,1 tesla environ.

On traite ainsi, successivement avec et sans le champ magnétique, une solution sulfurique à pH 1,6 contenant 1 g/l de cuivre et 0,256 g/l de fer, à l'état ferrique principalement, à 22°C, dans les conditions et avec les résultats suivants:

| Champ magnétique | NON | OUI |
|---|---|---|
| Débit de solution (litre/heure) | 425 | 576 |
| Solution finale: Cu mg/l | 44 | 0,3 |
| Fe g/l | 1,2 | 1,2 |
| Consommation de fer (g) par g Cu | 1,2 | 0,99 |
| Rendement en fer poids % | 71 | 90 |
| Composition du cément: Cu poids % | 82 | 99,2 |
| Fe poids % | 17 | 0,3 |

L'application du champ magnétique permet donc d'augmenter la productivité de plus de 40%, de réduire de 18% la consommation de fer et d'obtenir un cément de cuivre très pur. Le rendement en fer ci-dessus exprime la proportion (en atome %) de fer dispersé par rapport au cuivre déposé.

On a pu vérifier expérimentalement qu'à agitation équivalente, le phénomène de cémentation du cuivre sur le fer est considérablement "activé" en présence du champ magnétique et que l'on améliore non seulement la cinétique mais encore la pureté du cuivre produit et le rendement en fer. On peut donc considérer que les gradients de champ au voisinage des particules et lès courants induits sur ces mêmes particules exercent un effet favorable sur le transfert de matière.

Dans d'autres essais, en utilisant un lit fluidisé ayant les mêmes caractéristiques que ci-dessus, on traite une solution plus diluée avec un débit et donc une porosité beaucoup plus élevée. Pour une solution sulfurique à pH 1,6 contenant 0,273 gramme par litre de cuivre et 0,123 gramme par litre de fer, on obtient les résultats suivants:

| Agitation magnétique | NON | OUI |
|---|---|---|
| Débit de solution litre/heure | 867 | 1 180 |
| Solution finale: Cu g/l | 0,055 | 0,046 |
| Fe g/l | 0,386 | 0,39 |
| Consommation fer, g par g Cu | 1,55 | 1,11 |
| Rendement en fer, poids % | 57 | 80 |
| Composition du cément: Fe poids % | 27 | 99,3 |
| Cu poids % | 71 | 0,4 |

Exemple IV—Enrichissement de l'ilménite par traitement acide.

L'ilménite est un titanate de fer de formule brute $TiO_2FeO$. Elle se trouve dans les minerais mélangée à d'autres constituants tels que titanates de manganèse et de magnésium, oxydes de fer ferreux et ferrique et autres oxydes tels que ceux de silicium, aluminium, calcium, vanadium.

Le minerai est ferromagnétique. Après enrichissement par des méthodes physico-chimiques, il est vendu actuellement aux utilisateurs avec une teneur en $TiO_2$ qui varie de 35% à 65%.

Il est possible d'enrichir beaucoup plus ce minerai, mais les diverses méthodes qui existent déjà, dont la plus connue est la réduction carbothermique qui conduit au "slag", ont pour inconvénient qu'elles nécessitent de gros investissements, ou qu'elles passent par des conditions de travail difficiles: températures très élevées, ou fortes pressions, ou fortes concentrations des solutions d'attaque en acide.

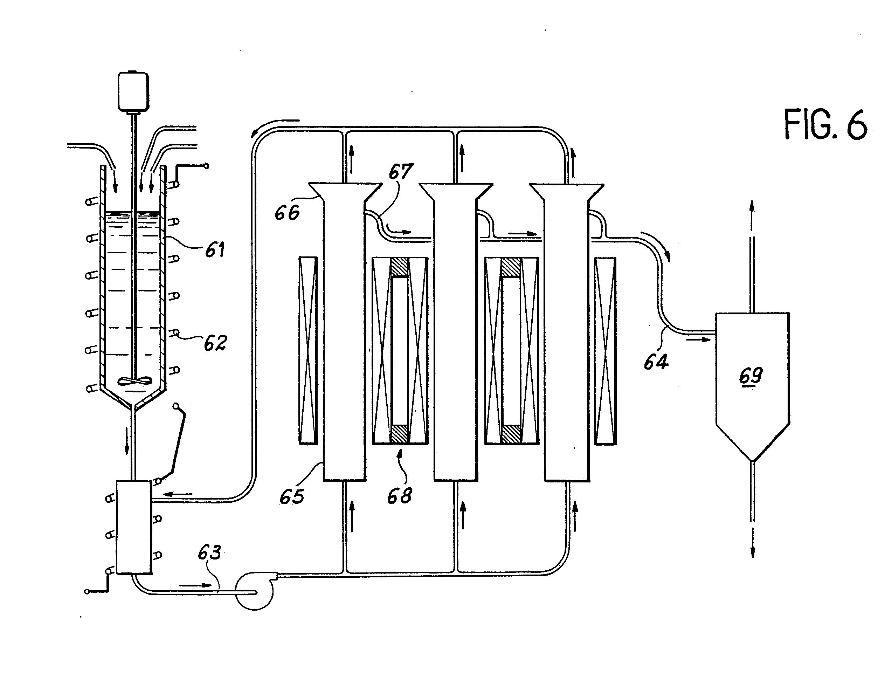

Le présent exemple décrit une manière plus simple et moins onéreuse de parvenir à un enrichissement grâce à l'emploi du procédé d'agitation magnétique selon l'invention, mis en oeuvre dans l'installation de la figure 6, l'agitation magnétique permettant d'utiliser une solution d'attaque acide plus diluée, qui peut être recyclée sans difficultés.

Le minerai finement broyé est mis en suspension sous agitation mécanique, en 61, dans une solution d'acide sulfurique à 150 grammes par litre, à raison de 15 kg de minerai pour 100 litres d'acide dilué. Le mélange est maintenu à une température moyenne comprise entre 70°C et 65°C et variant progressivement entre ces valeurs de l'entrée 63 à la sortie 64 du système. Cette température est imposée par un circuit de chauffage 62.

La suspension est envoyée en parallèle dans une série de réacteurs verticaux parallélépipédiques 65, de 3 mètres de haut, 0,30 mètre de large et 0,15 mètre de profondeur, en polypropylène ou en pyrex. La partie supérieure 66 des colonnes est évasée afin d'avoir une zone calme et claire d'où l'on extrait une proportion de 90% du débit du liquide, qui est ensuite mélangée avec 10% de suspension fraîche et recyclée à l'entrée des récupérateurs (en 63).

La vitesse de circulation est ajustée au départ pour que le lit soit mis en fluidisation, sa porosité étant voisine de 0,70. Les colonnes sont équipées sur une longueur de 2 mètres (partie centrale des colonnes) de dispositifs électromagnétiques 68, permettant de créer un champ magnétique alternatif de 0,1 tesla environ. Les noyaux magnétiques en ferro-silicium sont communs entre deux colonnes adjacentes et les bobinages sont montés de façon à obtenir une alternance de pôles nord et sud. Les bobines sont alimentées par l'intermédiaire d'une alimentation de puissance (non représentée) pilotée par un générateur de fonction (non représenté). La forme du courant qui traverse les spires du bobinage est alternative de fréquence 10 Hz et interrompue toutes les demi-secondes durant une demi-seconde. Ainsi, lorsque le champ magnétique ne s'exerce pas, il se produit un certain entraînement de petites particules par le courant de liquide.

Le champ magnétique est appliqué au départ, dès que la fluidisation du lit a été réglée. Sous l'influence du champ magnétique alternatif, les particules ferromagnétiques et fortement paramagnétiques décrivent des mouvements transversaux relatifs très rapides. Leur contact avec la solution acide est améliorée et leur vitesse de dissolution croît. Les particules se désagrègent peu à peu, elles deviennent de plus en plus fines et progressent lentement vers la sortie 67 des colonnes, cependant que les particules non ferromagnétiques détachées des agrégats sont entraînées en permanence par le flux du liquide vers la sortie 67. L'agitation magnétique facilite donc également la séparation des produits insolubles. Le débit sortant par 67 représente 10% du débit d'entrée. La sortie 67 est située à la partie supérieure du dispositif magnétique, et sous la zone calme 66.

Les particules qui échappent à l'attraction magnétique passent dans le flux sortant par 67, et arrivent par 64 dans un cyclone 69 où elles sont séparées du liquide. La phase liquide est constituée d'une solution de sulfate de fer et de

8

différents métaux (autres que titane), voisine de la saturation à la température de 65°C. La phase solide constitue le minerai enrichi, elle contient le titane sous forme d'oxyde, encore une petite partie de l'oxyde de fer d'origine, et d'autres oxydes insolubles comme la silice, le silicate de zirconium, de l'alumine, différents oxydes de métaux lourds. Le traitement a permis d'éliminer 70 à 75% du fer contenu dans le minerai de départ soumis au traitement.

En variante du présent exemple, on ajoute un agent réducteur dans la solution préparée en 61 afin d'augmenter le taux d'enrichissement et de solubiliser une plus grande partie des oxydes de métaux lourds. En opérant avec de la limaille de zinc, on peut augmenter le rendement d'élimination du fer et des autres impuretés. En outre, la phase liquide rejetée est plus riche en fer ferreux, ce qui facilite le traitement ultérieur du rejet liquide.

Exemple V—Lixiviation d'une matte de cuivre

Une matte de cuivre contenant 40% à 45% de cuivre, environ 20% de fer, du nickel et du soufre ainsi que d'autres impuretés en moins grande quantité, est soumise à un traitement acide oxydant par une solution aqueuse $H_2SO_4$/$FeCl_3$, afin de faire passer en solution le cuivre contenu dans cette matte sous la forme de sulfures de différents types.

La matte étant magnétique, cette propriété est exploitée pour effectuer la lixiviation dans des réacteurs munis d'un dispositif qui permet de créer, depuis l'extérieur des réacteurs, un champ magnétique variable à l'influence duquel se trouvent soumises les particules de matte.

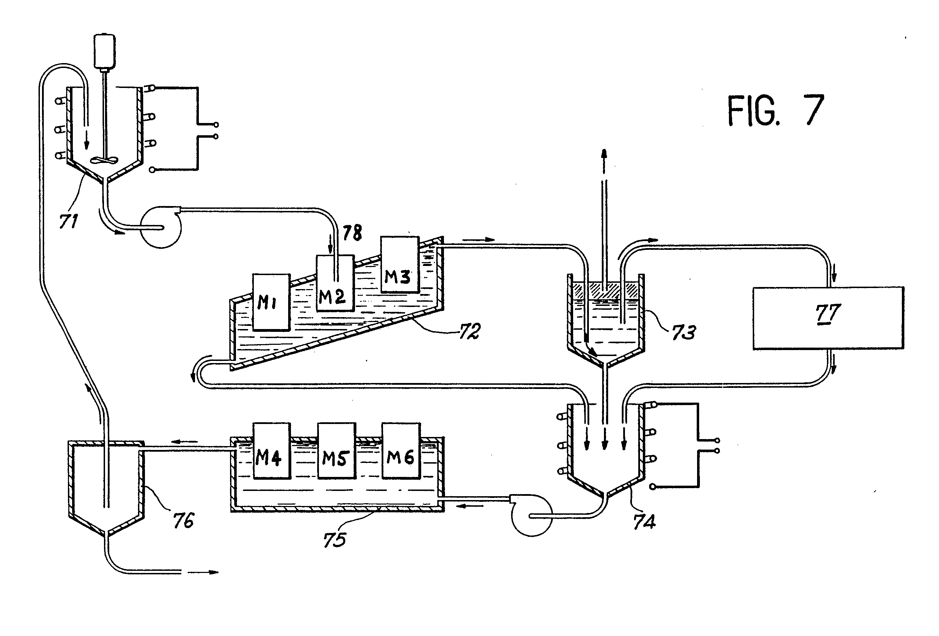

Le schéma de principe de la lixiviation est donné sur la figure 7. Les réacteurs 72 et 75, en résine époxyde renforcée de fibres de verre, sont équipés chacun de trois électroaimants M1, M2, M3, et M4, M5, M6, permettant de créer un champ de 0,1 tesla chacun. Les électro-aimants sont de forme annulaire et disposés à la suite les uns des autres sur le trajet des produits dans le réacteur correspondant, celui-ci passant dans l'entrefer de chaque électro-aimant, dont les pôles opposés sont respectivement devant et derrière le plan de la figure, et légèrement décalés vers le haut par rapport au niveau du réacteur.

Dans le réacteur 72, une entrée centrale 78 permet d'amener une suspension de matte finement broyée, de soufre résiduel et d'électrolyte en partie épuisé, préparée en 71 et portée à la température de 100°C. L'acidité de l'électrolyte ainsi que la quantité de $FeCl_3$ qu'il contient sont suffisants pour permettre de dissoudre à 100°C les sulfures et les oxydes de cuivre et de fer. Le résultant de l'attaque est la transformation de la matte en espèces solubles $CuSO_4$, $FeSO_4$, $NiSO_4$, $CuCl$, $FeCl_2$, $NiCl_2$, les ions $Fe^{+++}$ contenus dans la solution d'attaque passent sous forme de $FeCl_2$ et HCl. Du soufre élémentaire apparaît; il est séparé à la sortie du réacteur 72 dans le décanteur 73, où il surnage. La solution séparée est envoyée dans une installation d'extraction de cuivre 77 (où l'on peut appliquer tout procédé classique, ou celui de l'exemple III). Dans le réacteur 72, des parties fines insolubles non magnétiques forment une boue qui est entraînée du décanteur 73 vers le mélangeur 74. Dans ce mélangeur, toutes les parties solides résiduelles, à l'exception du soufre, provenant du réacteur 72 (soit directement, soit après séparation dans le décanteur 73) sont mélangées avec la solution d'attaque régénérée provenant de l'installation d'extraction 77. La composition de cette solution d'attaque comprend environ 150 g/l de $H_2SO_4$ et 150 g/l de $FeCl_3$. La température est portée à 100°C en 74.

Le mélange est ensuite introduit dans le réacteur 75. A la sortie de ce réacteur, le nouveau mélange solide-liquide est envoyé dans un cyclone 76, d'où l'on sépare le solide, qui sera éventuellement retraité pour extraire des éléments nobles tels que l'argent. La solution entraîne des particules de soufre élémentaire. C'est cette solution qui est envoyée dans le mélangeur 71 où l'on introduit la matte finement broyée.

Les trois électro-aimants M4, M5, M6, qui équipent le réacteur 75 sont alimentés cycliquement l'un après l'autre dans cet ordre, à partir d'une source de tension alternative 10 Hz à laquelle ils sont reliés par l'intermédiaire d'un contacteur rotatif. Ainsi, les particules magnétiques qui, d'une part sont entraînées par le flux de liquide de l'entrée (près de M6) vers la sortie (près de M4), et qui, d'autre part ont tendance à tomber sous l'influence de la pesanteur, sont entraînées à décrire un chemin inverse de celui du flux hydrodynamique et sont remises en suspension lorsque les électro-aimants sont alimentés en courant. Ces particules décrivent des parcours rapides et désordonnés dans le réacteur. On a ainsi une très bonne agitation et une vitesse de dissolution notablement augmentée. En un dixième de seconde, on fait parcourir le cycle complet d'alimentation; cette vitesse est réglée par la vitesse du contacteur rotatif.

Dans le cas du réacteur 72, on fait parcourir aux particules un chemin allant alternativement de M1 à M3 en ajoutant un contact supplémentaire correspondant à M2; ainsi, le contacteur met en position de fonctionnement successivement les électro-aimants M1, M2, M3, M2, M1, M2, M3, etc.

On peut, grâce à cette technique, obtenir un taux d'extraction du cuivre supérieur à 95%. La technique se caractérise en outre par sa propreté et par la rapidité de mise en solution. Elle permet d'effectuer le traitement à la température d'ébullition de la solution sous pression atmosphérique, c'est-à-dire dans des conditions moins sévères que les procédés usuels. De plus, on peut éviter certaines étapes ultérieures des procédés usuels en envoyant directement la solution obtenue à l'électrolyse.

En opérant dans des conditions analogues à celles qui viennent d'être décrites, on traite de la même manière une matte de nickel. La lixiviation est considérablement améliorée par le procédé d'agitation magnétique, la matte de métal contenant, comme celle de cuivre, des constituants ferromagnétiques.

Exemple VI—Hydrogénation catalytique.

On peut hydrogéner les acides gras non saturés contenus dans les matières grasses alimentaires afin d'améliorer les qualités de conservation des acides gras. En effet, la saturation des doubles liaisons permet d'éviter le phénomène de rancissement.

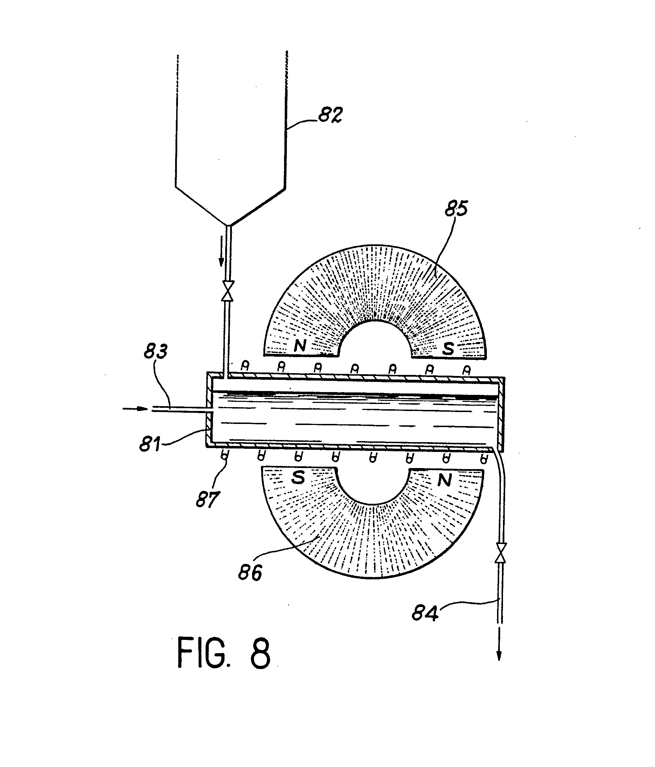

En utilisant le dispositif de la figure 8, on opère dans un autoclave tubulaire 81, en porcelaine, chauffé par une résistance chauffante 87. La matière grasse, admise du réservoir 82, emplit le tube aux 3/4. La température est maintenue à 180°C. On travaille sous pression réduite d'hydrogène à pression constante en présence de nickel catalytique réduit. L'hydrogène est admis par la conduite 83.

Deux électro-aimants 85 et 86 sont disposés le long du tube, l'un au-dessus de la partie contenant la phase gazeuse, l'autre au-dessous de la phase liquide. Les électro-aimants sont semi-circulaires et bobinés et alimentés de façon qu'un pôle nord soit en face d'un pôle sud. Un dispositif de commutation non représenté, mais analogue à ceux qui ont été utilisés dans les exemples précédents, permet de faire fonctionner alternativement chacun des deux électro-aimants en inversant périodiquement les pôles nord et sud. Le nickel décrit des mouvements rapides et passe de la phase liquide à la phase gazeuse en entrant en contact intime avec la solution à réduire. L'ensemble est ainsi agité, le nickel est dispersé, et le transfert de masse est accéléré sans qu'il soit nécessaire d'avoir des parties tournantes dans l'autoclave. Lorsque le débit d'hydrogène devient nul, on alimente en permanence un seul des deux aimants, soit 85, de façon à maintenir le catalyseur contre la paroi supérieure. La matière grasse traitée est prélevée en 84, en ayant soin de ne pas laisser entrer d'air, ni laisser échapper d'hydrogène. Un nouveau lot de matière grasse à traiter est alors introduit.

Exemple VII

Cet exemple constitue une variante de l'exemple II. Il s'en distingue par le fait que les particules magnétiques intervenant dans l'agitation par induction magnétique sont rendues inertes vis-à-vis de la solution métallique traitée par protection électrochimique (cathodique). Ces particules étant choisies pour leurs propriétés magnétiques, il s'agit de préférence de fer, ou éventuellement de fonte. Mais le métal des particules magnétiques, qui, s'il n'était pas protégé, pourrait se dissoudre en déplaçant les impuretés moins électropositives en solution, peut être porté lui-même au potentiel d'un métal plus réducteur choisi pour déplacer les impuretés, de manière à favoriser la dissolution préférentielle de ce dernier.

Dans le cas considéré de la purification de solutions zincifères destinées à l'électrolyse contenant en impuretés des espèces moins électropositives telles que le cuivre, le cobalt, le cadmium, l'antimoine, l'agent réducteur est constitué comme dans l'exemple II par du zinc solide, mais celui-ci peut être massif et indépendant des particules de fer, sous forme de tôles, barreaux, ou chutes d'usinage, et même immobile, et les particules en suspension qui permettent l'agitation magnétique, et qui sont conductrices, sont portées par leurs contacts répétés avec le zinc au potentiel de ce métal.

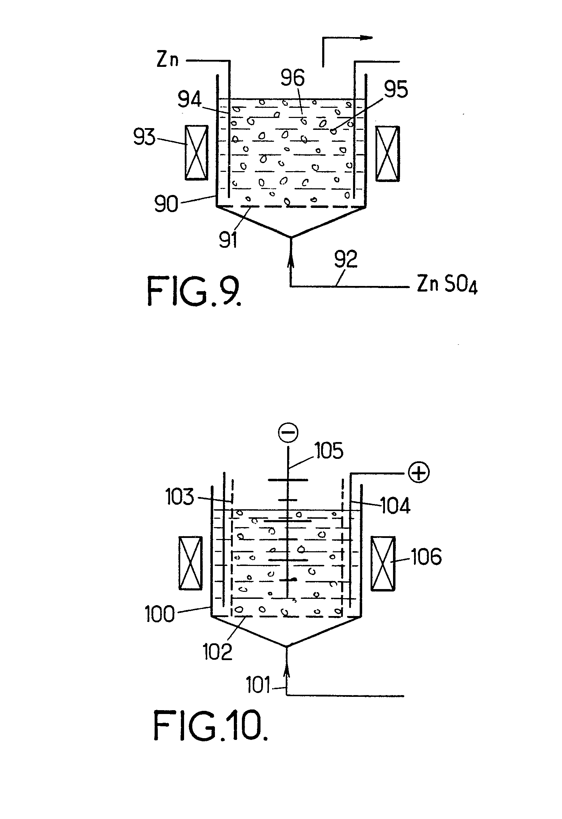

Conformément à la figure 9, des barres de zinc 94 plongent dans la solution zincifère sulfurique qui est introduite par une conduite 92 débouchant au fond du réacteur 90, à travers une grille 91. Au-dessus de cette grille le réacteur contient des particules de fer doux 95—96 qui, en fonctionnement, sont dispersées dans la solution et mises en mouvement permanent grâce à l'agitation magnétique assurée par des aimants 93. Cette agitation est suffisamment énergique pour que les particules en suspension acquièrent par contact avec le zinc un potentiel voisin du potentiel de dissolution du zinc, de sorte que seul celui-ci est attaqué alors que la surface intervenant dans les réactions de déplacement des espèces métalliques est augmentée de celle des particules de fer. Les impuretés déplacées se déposent principalement sur ces particules, qui sont ensuite faciles à séparer de la solution purifiée puisqu'elles sont retenues par le champ magnétique.

Exemple VIII

Les mêmes avantages que dans l'exemple VII se retrouvent dans la variante illustrée par la figure 10, suivant laquelle on réalise un apport de courant électrique assurant la protection cathodique des particules de fer. On retrouve sur la figure 10 le réacteur 100, la grille de retenue des particules 102, la conduite d'amenée de la solution 101 et les aimants 106.

Deux électrodes plongeant dans la solution à intérieur du réacteur sont reliées à une source de courant continu extérieure. L'anode 104 est disposée annulairement autour de l'espace réactionnel contenant les particules de fer, limité par un diaphragme cylindrique 103. Elle est réalisée en titane, en graphite, on en tout autre matériau conducteur non ferromagnétique, pour ne pas faire écran à l'entraînement des particules en suspension par les aimants extérieurs au réacteur, et inattaquable dans les conditions de mise en oeuvre du traitement, ou même en zinc. La cathode 105 est disposée dans l'axe. Elle comporte des prolongements latéraux qui multiplient les contacts avec les particules dispersées en agitation sans entraver exagérément leurs déplacements. Cette cathode peut être en zinc ou en aluminium pour une solution zincifère, mais aussi en un autre métal compte tenu de la protection cathodique assurée, la tension étant choisie suffisante pour faire déposer les espèces métalliques en solution qui constituent les impuretés à éliminer, et même en fer, malgré le caractère magnétique de ce métal du fait de la disposition axiale de l'électrode.

Les reactions électrochimiques se produisent à la surface des particules conductrices de fer qui se trouvent portées par contact au potentiel protecteur de la cathode. Non seulement le fer n'est pas attaqué, mais en outre, la source de courant extérieure évite le consommation de quantités importantes de zinc. Par ailleurs, l'agitation intense assurée magnétiquement permet en général de détacher par les chocs les dépôts métalliques, notamment de cuivre, qui se forment sur les particules de fer. Ces impuretés précipitées sont entraînées avec le liquide et séparées de celui-ci hors du réacteur.

Naturellement et ainsi d'ailleurs qu'il résulte déjà largement de ce qui précède, l'invention n'est en rien limitée aux conditions particulières qui ont été décrites dans le cadre de ces exemples. Pratiquement, de multiples réactions physicohimiques sont susceptibles d'être mises en oeuvre avec agitation par induction magnétique conformément à l'invention et dans chaque cas particulier la forme et la périodicité du champ magnétique appliqué peuvent être choisies de telle sorte que l'activation des processus physiques et/ou des réactions chimiques mis en oeuvre, résultant des perturbations locales au voisinage des particules ou éléments en suspension, soit maximale.

**Revendications**

1. Procédé de mise en oeuvre de réactions dans un milieu fluide, caractérisé en ce que l'on soumet à l'action d'un champ magnétique variable une matière solide magnétique librement dispersée dans ce milieu fluide et réalisée, au moins en surface, en une substance jouant dans ladite réaction un rôle physicochimique ou chimique.

2. Procédé selon la revendication 1, caractérisé en ce que le champ magnétique est suffisamment intense pour imposer aux particules de ladite matière des vitesses instantanées de déplacement relatif par rapport au fluide nettement supérieures à celles qui peuvent être dues à d'autres forces, comme la pensanteur, et en ce qu'on le fait varier, en intensité, position et/ou direction, de manière à maintenir les particules en suspension dans le fluide.

3. Procédé selon la revendication 1 ou 2, caractérisé en ce que l'on fait varier le champ magnétique périodiquement entre deux sens opposés, dans un moins une direction.

4. Procédé selon la revendication 1, 2 ou 3, caractérisé en ce que la réaction mise en oeuvre est une réaction d'oxydoréduction.

5. Procédé selon l'une quelconque des revendications 1 à 4, caractérisé en ce qu'il est appliqué à une réaction physicochimique ou chimique faisant intervenir deux produits présentant des propriétés magnétiques différentes.

6. Procédé selon l'une quelconque des revendications 1 à 5, caractérisé en ce qu'il est appliqué à une réaction d'oxydoréduction entre une substance solide constituant au moins une partie de la surface de particules magnétiques, et un composé relativement non magnétique, constituant au moins partiellement ledit fluide, et notamment en solution dans celui-ci.

7. Procédé selon l'une quelconque des revendications 1 à 6, caractérisé en ce qu'il est appliqué à la mise en oeuvre de réactions électrochimiques, notamment de réaction de déplacement de métaux en solution, et en ce que la solution contient des particules dispersées conductrices et magnétiques qui, sous l'effet de l'agitation due au champ magnétique variable, prennent par contact le potentiel d'une masse solide.

8. Procédé selon la revendication 1, caractérisé en ce que ladite matière magnétique est un minerai dispersé dans un milieu acide capable d'en dissoudre au moins certains constituants par oxydation ou réduction.

9. Procédé selon la revendication 8, caractérisé en ce que ledit minerai est de l'ilménite en milieu sulfurique pour provoquer la dissolution du fer.

10. Procédé selon la revendication 8, caractérisé en ce que ledit minerai est à base de sulfure de cuivre ou de nickel et dispersé en milieu acide oxydant.

11. Procédé selon la revendication 1, caractérisé en ce que le milieu est une solution zincifère contenant en impuretés des espèces ioniques moins électropositives que le zinc et en ce que la matière magnétique dispersée est constituée de particules de fer soit revêtues de zinc soit amenées par l'agitation en contact conducteur avec du zinc métal ou une cathode au potentiel de dissolution du zinc.

12. Procédé selon la revendication 6, caractérisé en ce qu'il est appliqué à la cémentation sur du fer dispersé, de métaux moins électropositifs, tels que le cuivre, à partir de solutions diluées.

13. Procédé selon la revendication 1, caractérisé en ce que, la réaction consistant en une hydrogénation catalytique d'une phase liquide, la matière solide dispersée est constituée de particules magnétiques revêtues d'un agent catalytique tel que le zinc, que le champ magnétique variable agite entre la phase liquide et une phase gazeuse riche en hydrogène.

14. Procédé selon l'une quelconque des revendications 1 à 13, caractérisé en ce que le champ magnétique variable est applique de manière entraîner sélectivement les particules magnétiques dans un sens déterminé par rapport au milieu.

## Patentansprüche

1. Verfahren zum Durchführen von Reaktionen in einem fluidförmigen Medium, dadurch gekennzeichnet, daß ein fester, magnetischer Stoff, der in diesem fluidförmigen Medium frei dispergiert ist, der Einwirkung eines veränderlichen Magnetfeldes unterworfen wird, wobei wenigstens dessen Oberfläche aus einer Substanz, besteht, die während der Reaktion eine physikalisch-chemische oder chemische Rolle spielt.

2. Verfahren nach Anspruch 1, dadurch gekennzeichnet, daß das Magnetfeld ausreichend stark ist, um den Teilchen des genannten Stoffes momentane Geschwindigkeiten einer Bewegung relativ zum Fluid zu erteilen, die erheblich größer als diejenigen sind, die von anderen Kräften, wie z.B. der Schwerkraft stammen können und daß seine Intensität, Position und/oder Richtung derart verändert wird, daß die Teilchen im Fluid suspendiert bleiben.

3. Verfahren nach Ansprüchen 1 oder 2, dadurch gekennzeichnet, daß das Magnetfeld in wenigstens einer Richtung periodisch gegensinnig verändert wird.

4. Verfahren nach Ansprüchen 1, 2 oder 3, dadurch gekennzeichnet, daß die durchgeführte Reaktion eine Oxidation-Reduktion-Reaktion ist.

5. Verfahren nach einem der Ansprüche 1 bis 4, dadurch gekennzeichnet, daß es bei einer physikalisch-chemischen oder chemischen Reaktion angewandt wird, bei der zwei Stoffe mit unterschiedlichen magnetischen Eigenschaften beteiligt sind.

6. Verfahren nach einem der Ansprüche 1 bis 5, dadurch gekennzeichnet, daß es bei einer Oxidation-Reduktion-Reaktion angewandt wird zwischen einer festen Substanz, die wenigstens einen Teil der Oberfläche der magnetischen Teilchen bildet und einer relativ nichtmagnetischen Verbindung, die wenigstens teilweise das Fluid bildet und insbesondere in diesem gelöst ist.

7. Verfahren nach einem der Ansprüche 1 bis 6, dadurch gekennzeichnet, daß es bei der Durchführung von elektrochemischen Reaktionen, insbesondere Verschiebereaktionen von gelösten Metallen angewandt wird und daß die Lösung leitende und magnetische dispergierte Teilchem enthält, welche unter dem Einfluß der Rührwirkung aufgrund des variablen Magnetfeldes durch Berührung das Potential einer festen Masse annehmen.

8. Verfahren nach Anspruch 1, dadurch gekennzeichnet, daß der magnetische Stoff ein in einem sauren Medium dispergiertes Erz ist, das in der Lage ist, davon wenigstens bestimmte Bestandteile durch Oxidation oder Reduktion zu lösen.

9. Verfahren nach Anspruch 8, dadurch gekennzeichnet, daß das Erz Titaneisenerz im Schwefelsäuremedium ist, um das Lösen von Eisen zu bewirken.

10. Verfahren nach Anspruch 8, dadurch gekennzeichnet, daß das Erz ein Erz auf Basis von Kupfersulfid oder Nickelsulfid ist und in einem oxidierenden saueren Medium dispergiert ist.

11. Verfahren nach Anspruch 1, dadurch gekennzeichnet, daß das Medium eine zinkhaltige Lösung ist, die als Verunreinigungen Ionenarten enthält, welche weniger elektropositiv als das Zink sind und daß der dispergierte, magnetische Stoff aus Eisenteilchen besteht, welche entweder mit Zink beschichtet sind oder durch die Rührwirkung in leitende Berührung mit metallischem Zink oder einer Kathode mit dem Lösungspotential von Zink gelangen.

12. Verfahren nach Anspruch 6, dadurch gekennzeichnet, daß es bei der Einsatzhärtung von dispergiertem Eisen angewandt wird, mittels weniger elektropositiver Metalle, wie z.B. Kupfer, ausgehend von verdünnten Lösungen.

13. Verfahren nach Anspruch 1, dadurch gekennzeichnet, daß die Reaktion eine katalytische Wasserstoffanlagerung in einer flüssigen Phase ist, daß der dispergierte, feste Stoff aus magnetischen Teilchen besteht, welche mit einem Katalysator, wie z.B. Zink, beschichtet sind und daß das variable Magnetfeld zwischen der flüssigen Phase und einer mit Wasserstoff angereicherten Gasphase wirkt.

14. Verfahren nach einem der Ansprüche 1 bis 13, dadurch gekennzeichnet, daß das variable Magnetfeld derart angelegt wird, daß es die magnetischen Teilchen in einer vorbestimmten Richtung bezüglich des Mediums selektiv in Bewegungen setzt.

## Claims

1. Method for carrying out reactions in a fluid medium, characterized in that there is subjected to the action of a variable magnetic field a solid magnetic material freely dispersed in this fluid medium and formed, at least at the surface, of a substance which performs a physico-chemical or chemical function in said reaction.

2. Method in accordance with claim 1, characterized in that the magnetic field is sufficiently intense to impart to the particles of said material instantaneous velocities of relative displacement with respect to the fluid which are distinctly higher than those which may result from other forces such as gravity, and that it caused to vary in intensity, position and/or direction in such a manner as to maintain the particles in suspension in the fluid.

3. Method in accordance with claim 1 or 2, characterized in that the magnetic field is caused to vary periodically between two opposite senses, at least in one direction.

4. Method in accordance with claim 1, 2 or 3, characterized in that the reaction involved is an oxidation-reduction reaction.

5. Method in accordance with any one of claims 1 to 4, characterized in that it is applied to a physicochemical or chemical reaction involving the use of two products having different magnetic properties.

6. Method in accordance with any one of claims 1 to 5, characterized in that it is applied to an oxidation-reduction reaction between a solid substance constituting at least part of the surface of magnetic particles, and a relatively non-magnetic compound constituting said fluid at least to a partial extent and especially in solution in this latter.

7. Method in accordance with any one of claims 1 to 6, characterized in that it is applied to the initiation of electrochemical reactions, especially reactions involving displacement of metals in solution, and that the solution contains dispersed conductive and magnetic particles which, under the action of agitation produced by the variable magnetic field, acquire by contact the potential of a solid mass.

8. Method in accordance with claim 1, characterized in that said magnetic material is an ore dispersed in an acid medium which is capable of dissolving at least some of its constituents by oxidation or reduction.

9. Method in accordance with claim 8, characterized in that said ore is ilmenite in a sulphuric acid medium in order to initiate dissolution of the iron.

10. Method in accordance with claim 8, characterized in that said ore has a base of copper sulphide or nickel and dispersed in an oxidizing acid medium.

11. Method in accordance with claim 1, characterized in that the medium is a zinci-ferous solution containing in impurities ionic species which are less electropositive than zinc and that the dispersed magnetic material is constituted by iron particles either coated with zinc or brought by agitation into conductive contact with zinc metal or a cathode at the dissolution potential of zinc.

12. Method in accordance with claim 6, characterized in that it is applied to cementation on dispersed iron, of less electropositive metals such as copper, starting from dilute solutions.

13. Method in accordance with claim 1, characterized in that, since the reaction consists of catalytic hydrogenation of a liquid phase, the dispersed solid material is constituted by magnetic particles coated with a catalytic agent such as zinc, that the variable magnetic field agitates between the liquid phase and a gas phase which is rich in hydrogen.

14. Method in accordance with any one of claims 1 to 13, characterized in that the variable magnetic field is applied in such a manner as to entrain the magnetic particles selectively in a predetermined direction with respect to the medium.

FIG. 1

FIG. 2A

FIG. 2B

FIG. 3

FIG. 4

FIG. 5

FIG. 6

FIG. 7

0 014 109

FIG. 8

FIG.9.

FIG.10.